Europäisches Patentamt

European Patent Office

Office européen des brevets

(19)

(11)  EP 0 908 002 B1

(12)  EUROPEAN PATENT SPECIFICATION

(45) Date of publication and mention
of the grant of the patent:
**09.03.2005 Bulletin 2005/10**

(51) Int Cl.⁷: **H02P 6/14**, H02P 6/08

(21) Application number: **97927289.5**

(22) Date of filing: **23.06.1997**

(86) International application number:
**PCT/GB1997/001675**

(87) International publication number:
**WO 1997/050171 (31.12.1997 Gazette 1997/57)**

(54) **CONTROL APPARATUS AND METHOD FOR ELECTRIC MOTOR-GENERATORS**

VERFAHREN UND VORRICHTUNG ZUR STEUERUNG VON ELEKTRISCHEN
MOTOR-GENERATOREN

APPAREIL ET METHODE DE REGULATION DE GROUPES CONVERTISSEURS

(84) Designated Contracting States:
**DE FR GB**

(30) Priority: **26.06.1996 GB 9613435**

(43) Date of publication of application:
**14.04.1999 Bulletin 1999/15**

(73) Proprietor: **Urenco (Capenhurst) Limited
Chester CH1 6ER (GB)**

(72) Inventors:
• **PROUD, Neil James
  Warrington, Cheshire WA3 6AS (GB)**
• **KELSALL, David Robert
  Capenhurst CH1 5ER (GB)**
• **ALEXANDER, Thomas Michael,
  Heenan Drives Ltd.
  Worcester WR3 8TL (GB)**
• **JENKINS, Marcus Kennedy,
  Magnetic Systems Techno.
  Sheffield S9 3SP (GB)**

(74) Representative: **Brandon, Paul Laurence
APPLEYARD LEES,
15 Clare Road
Halifax HX1 2HY (GB)**

(56) References cited:
**WO-A-95/02271          WO-A-96/01521
US-A- 4 546 293          US-A- 4 617 507
US-A- 5 491 978**

• **PATENT ABSTRACTS OF JAPAN vol. 010, no.
011 (E-374), 17 January 1986 & JP 60 174088 A
(FANUC KK), 7 September 1985,**

**Description**

The present invention relates to control systems for ac-powered electric motor-generators, and in particular to control systems for such motor-generators in the form of kinetic energy storage devices, such as that described in published international patent applications WO 9502269, WO 9502270 and WO 9502271 and WO 9502272. These devices are designed for use with electrical energy generation, distribution and consumption networks, and find particular applications as so-called uninterruptible power supplies.

Such motor-generators, while operating with a three-phase ac supply, have control characteristics which are based on the principles of a brushless dc motor. A brushless dc motor, sometimes described as a self-commutated or electronically commutated dc motor, consists of a permanent magnet rotor and a polyphase wound stator. In order to maintain rotation of the rotor, the load angle must be maintained above zero degrees. The load angle is the angular displacement in electrical degrees between the axes of the stator and rotor fields. The maximum torque is produced when the load angle is $90°$.

To maintain the load angle above $0°$, the current in the stator has to be switched in a cycle manner and in sequence. In a brushless dc motor this is usually achieved by switching the stator voltage and current in synchronism with the rotor position, the rotor position being detected by sensing devices.

Such energy storage devices operate typically at very high rotational speeds, the energy stored being proportional to the square of the rotational speed. Whilst conventional, low-speed motors may be effectively controlled by a relatively simple electrical control system which is operative over a range of speeds from zero to a relatively low maximum rotational speed, such control systems would not be efficient if operated over the large range of rotational speeds encountered in the above type of energy storage device, e.g. up to 900 Hz (54,000 r.p.m.).

WO-A-96 01521 discloses a drive system for a brushless DC motor which uses pulse width modulation, and phase timing advancement to maintain a constant power output during high speed use. The arrangement is suitable for driving a brushless motor in an electric vehicle and the like. However it is not suitable for a motor generator.

US-A-4546293 discloses a motor control system for a brushless dc motor having an inverter responsively coupled to the motor control system and in power transmitting to the motor. The motor control system includes a motor rotor speed detecting unit that provides a pulsed waveform signal proportional to rotor speed. This pulsed waveform signal is delivered to the inverter to thereby cause an inverter fundamental current waveform output to the motor to be switched at a rate proportional to said rotor speed. In addition, the fundamental current waveform is also pulse width modulated at a rate proportional to the rotor speed.

US-A-4617507 discloses a self-regulating energy storage system including: an ac motor/generator including a rotor; a flywheel attached to the motor/generator; a device for monitoring the position of the motor/generator rotor; an element for resolving current to and from the motor/generator; a pulse width modulated bi-directional inverter interconnecting the motor/generator with a power supply bus to be regulated; a summing circuit for determining differences between a reference voltage and the voltage in the power supply bus to be regulated; and a pulse width modulation switch control responsive to the comparator circuit, to the device for monitoring, and to the element for resolving, for actuating the inverter to increase pulse width as a function of increase in the difference between the reference voltage and the voltage on the bus, and to increase current to the motor/generator in the motor direction when the bus voltage exceeds the reference voltage and to increase current from the motor/generator in the generator direction when the reference voltage exceeds the bus voltage.

It would therefore be desirable to provide a suitable control system for such an energy storage device which operates efficiently over the entire range of rotational speeds likely to be encountered, and which permits the efficient transfer of power into, and out of, the motor-generator.

According to the present invention in a first aspect, there is provided a control apparatus for an ac-powered electric motor-generator, wherein the control apparatus is configured whereby, in use, during a first, low-speed regime, the power input is controlled by varying the time averaged voltage applied to the motor-generator within each half electrical cycle, while keeping substantially constant the phase of the applied voltage in relation to the rotational position of the motor-generator and, during a second, high-speed regime, the power input/output is controlled by varying the phase of the voltage in relation to the rotational position of the motor generator both when the motor-generator is acting as a motor and when it is acting as a generator.

According to the present invention in a second aspect, there is provided a method of controlling an ac-powered electric motor-generator, wherein, during a first, low-speed regime the power input is controlled by varying the time-average voltage applied to the motor-generator within each half electric cycle, while keeping substantially constant the phase of the applied voltage in relation to the rotational position the motor-generator and, during a second, high-speed regime the power input/output is controlled by varying the phase of the voltage in relation to the rotational position of the motor-generator both when the motor-generator is acting as motor and when it is acting as a generator.

With such an arrangement, the magnitude of the electric current at low speeds may advantageously be held at a constant level such that heating losses in the coils are not excessive, whereas, at high speed, phase angle control is used as an effective means of controlling the power flow due to the fact that the back-emf is closer to the level of the applied voltage.

In a first arrangement, the power transfer during the second, high-speed regime is controlled purely by varying the phase of the applied voltage, in relation to the rotational position of the motor-generator.

However, in a second arrangement, the power transfer is additionally controlled by varying the time-averaged voltage applied to the motor within each half electrical cycle. In this case, the phase of the voltage is advantageously controlled such that the motor current is in phase with the back-emf, thereby maximising the power flow into, or out of the motor-generator.

Preferred embodiments of the present invention will now be described with reference to the accompanying drawings, wherein:

Figure 1 represents schematically the motor-generator and associated control system in accordance with a preferred embodiment of the present invention;

Figure 2 represents schematically in plan view the rotor and stator of the motor-generator shown in Figure 1;

Figure 3 illustrates the circuitry used in a first, low-speed regime;

Figure 4 represents circuitry used for generating a current signal in the low-speed regime;

Figure 5 illustrates waveforms of the signals generated in the circuitry of Figure 4;

Figure 6 illustrates the generation of voltage signals using pulse width modulation in the circuitry of Figure 3;

Figure 7 illustrates the switching arrangement for connecting the stator coils to a dc link;

Figure 8 illustrates the voltage signals applied to the three phases of the stator coils in the low-speed regime;

Figure 9 illustrates the relationship between the applied voltage, the current and the back-emf in the stator coils in the low-speed regime;

Figure 10 illustrates circuitry used in the high-speed regime;

Figure 11 illustrates the relationship between the applied voltage, the current and the back-emf in the stator coils in the high-speed regime in a first arrangement; and

Figure 12 illustrates the relationship between the applied voltage, the current and the back-emf in the stator coils in the high-speed regime in a second arrangement.

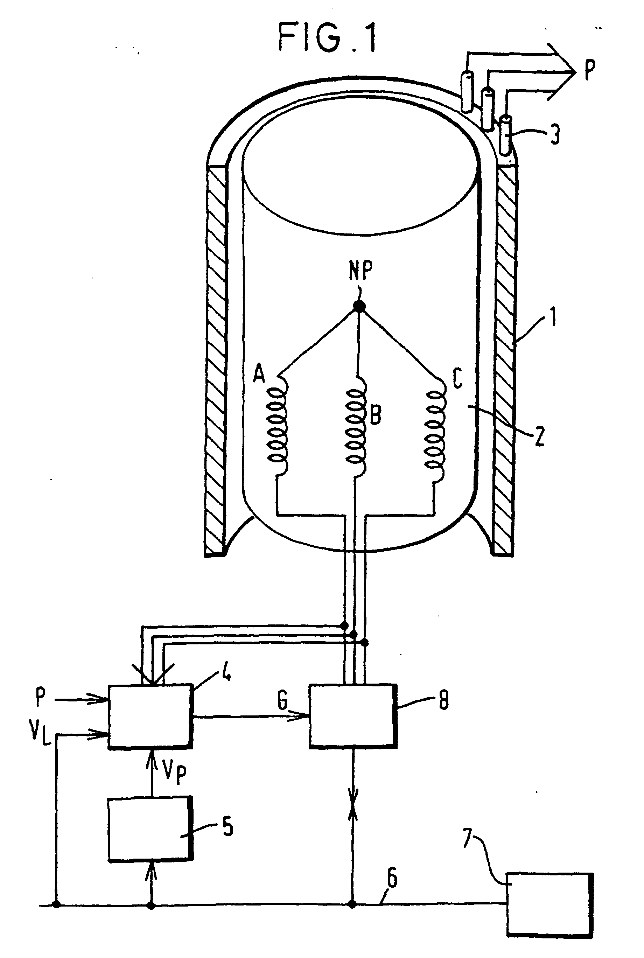

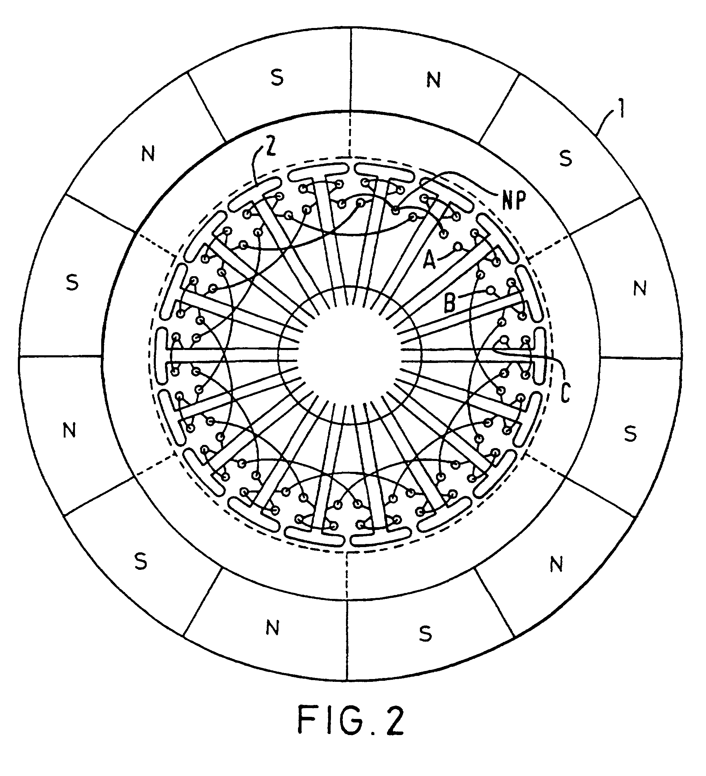

With reference to Figure 1, a motor-generator comprises a permanent-magnet rotor 1 in the form of a hollow cylinder formed from a composite wound cylinder loaded with a permanent magnetic material, such as neodymium iron boron (NdFeB). The magnetic poles are implanted into the rotor material by placing the whole rotor on a magnetising fixture and subjecting it to a very high energy pulse. The rotor is structured so as to generate a substantially sinusoidal back-emf during rotation. As shown more clearly in Figure 2, the number of poles used in this motor-generator is twelve, i.e. six pole pairs, so that, for each mechanical revolution of the rotor, there are six electrical cycles. The rotor is structured magnetically such that the magnetic poles appear on the inner wall of the cylinder, with no poles present on the outer wall.

A stator 2 is housed within the rotor 1 and is made from a soft ferrite having a very low iron loss, especially at high frequency. The stator has eighteen teeth around each of which a coil is wound. The number of turns in each coil is chosen in dependence on the required machine voltage. From Figure 2 it can be seen that there are six coils for each electrical phase, and these coils are connected in series, the three phase windings A, B and C being connected at a neutral point NP in a star configuration.

Returning to Figure 1, three position sensors 3 in the form of optical transmitters and corresponding receivers are mounted in the motor-generator and spaced apart by 120° (electrical). These are used, in conjunction with a disc encoder mounted on the rotor, to generate signals P indicating the relative position of the rotor 1 and the stator 2, and these signals P are used to derive the commutation timing. Voltages $V_A$, $V_B$ and $V_C$ are applied to the respective phases A, B and C of the stator coils using gating signals G supplied from a control module 4 which is powered from a power supply 5 connected to a dc link 6. The respective currents $I_A$, $I_B$ and $I_C$ in the three phases of the stator coils are sensed by the control module 4, and the gating signals G are determined in dependence on the sensed currents $I_A$, $I_B$ and $I_C$, together with the position signals P and a demand signal. The demand signal is generated from a look-up table in response to the voltage $V_L$ on the dc link 6, which, in the generator mode, supplies current to a load 7. The voltage on the dc link 6 is typically either 600V, when using purely phase control in the high-speed regime, or 90V when using both phase control and voltage level control at high speed. In the former case, the power output is typically 40kw, and, in the latter case, 5kW.

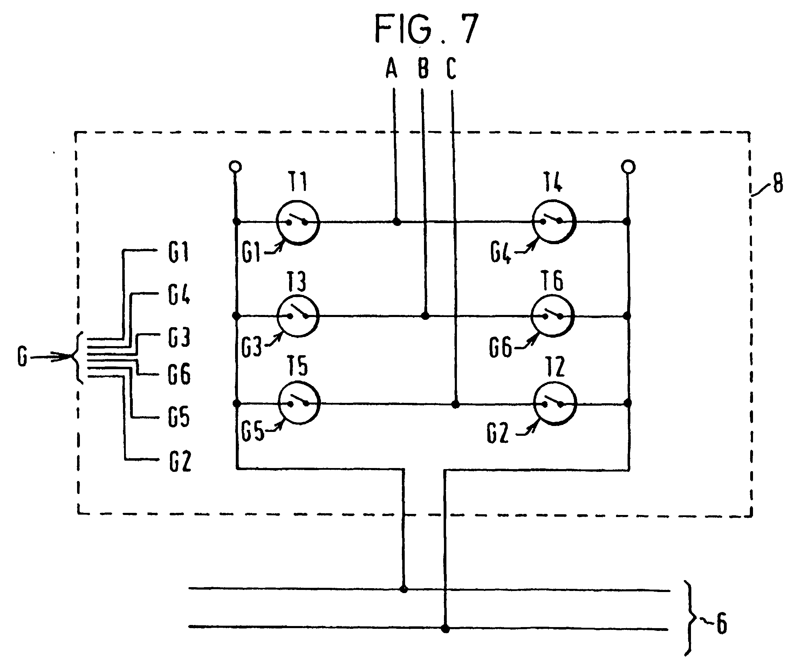

When acting in the generator mode, the current in the stator coils is supplied to the dc link 6 through a switching module 8. The switching arrangement is shown in more detail in Figure 7, described below. In this mode, the power supply 5 is itself powered directly from the dc link 6.

The motor-generator is arranged such that the rotor 1 may rotate at very high rotational speeds, up to a maximum of about 900 Hz (54,000 r.p.m.) . With six electrical cycles per revolution, this results in a maximum electrical frequency of 5.4 kHz. In order to achieve control over the full range of speeds from zero to this upper limit, two separate speed control regimes are employed. Up to a rotational frequency of about 400 Hz, the voltage supplied to the stator coils is controlled using pulse width modulation, which will be described below. With this arrangement, the average magnitude of the voltage applied to the three phases of the stator coils in each half electrical cycle is controlled on the basis of a demand signal, and the timing of the voltage signals is controlled using the gating signals G, as described above. In this low-speed regime, the demand signal is such that the current in the stator coils is held at a constant level and is substantially in phase with the applied voltage. Since the back-emf is proportional to the rotational speed of the motor-generator, the magnitude of the back-emf is relatively small in the low-speed regime.

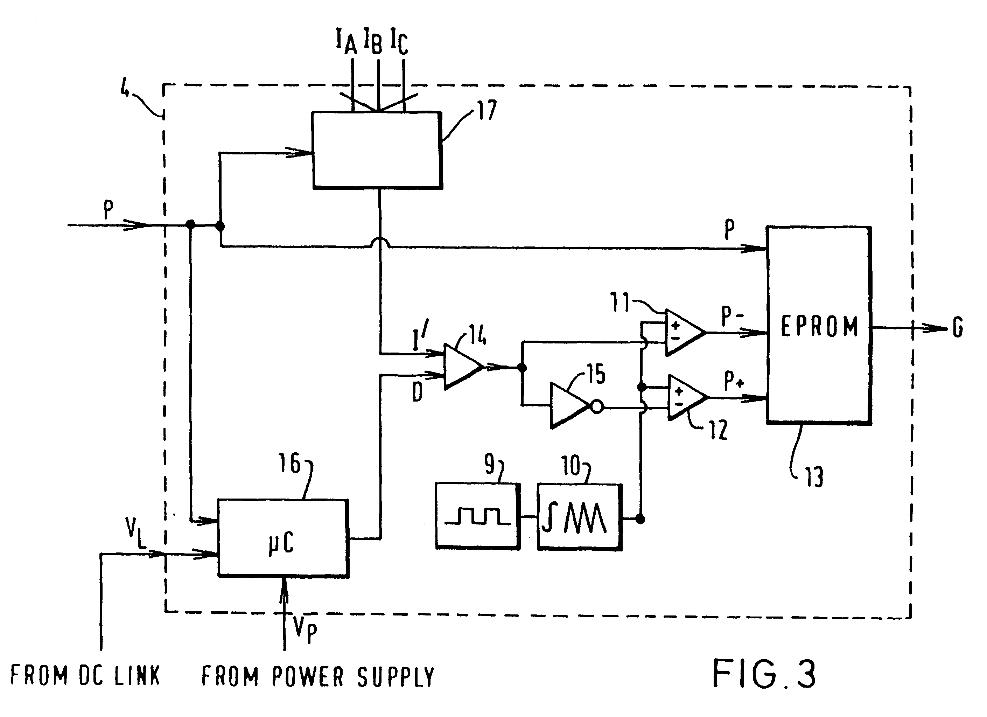

The circuitry used in the low-speed regime is shown in Figure 3. A square-wave generator 9 supplies a 10 kHz 5V peak square-wave voltage signal to an integrator 10 which converts the square-wave signal into a 10kHz 5V peak triangular wave signal which is then applied to the respective positive inputs of first and second comparators 11, 12. Appropriate positive and negative threshold signals are applied to the negative inputs of the comparators 11, 12, and the output signals (P-) and (P+) of the respective comparators 11, 12 are supplied to an EPROM 13. Based on the output signals (P-) and (P+), together with the position signals P from the position sensors 3, the EPROM 13 generates the gating signals G which are supplied to the switching module 8 (see Figure 1).

The threshold signals $V_{TH}$, $-V_{TH}$ supplied to the comparators 11, 12 are derived from the output of a third comparator 14. The negative threshold signal $-V_{TH}$ is generated by an inverter 15 connected between the output of the third comparator 14 and the negative input of the second comparator 12. The third comparator 14 compares a current demand signal D from a microcontroller 16 with a signal I' representing the magnitude of the current in the stator coils. The value of I' is obtained as an output from a current evaluating unit 17 supplied with signals indicating the respective currents $I_A$, $I_B$ and $I_C$ in the three stator coils, together with the position signals P from the position sensor 3.

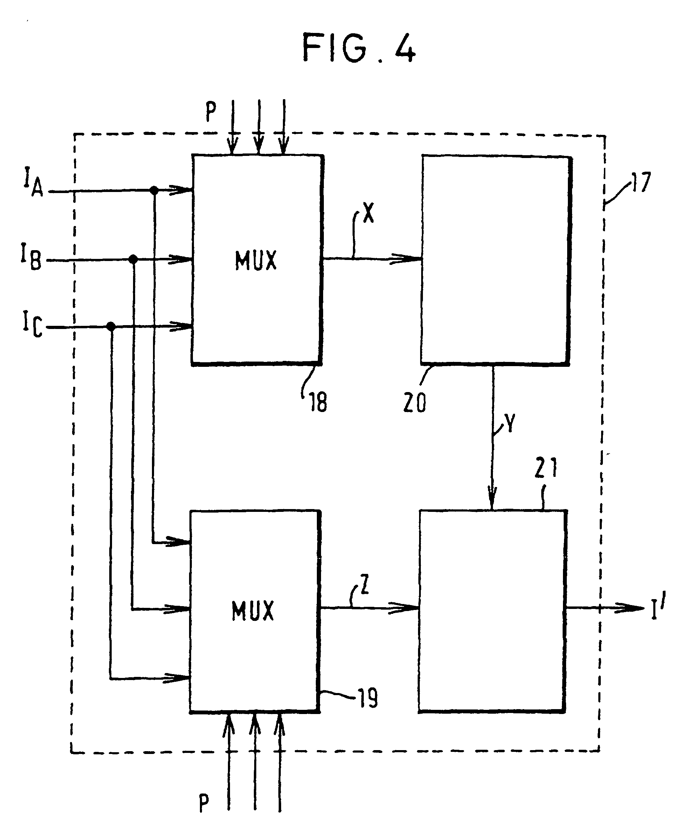

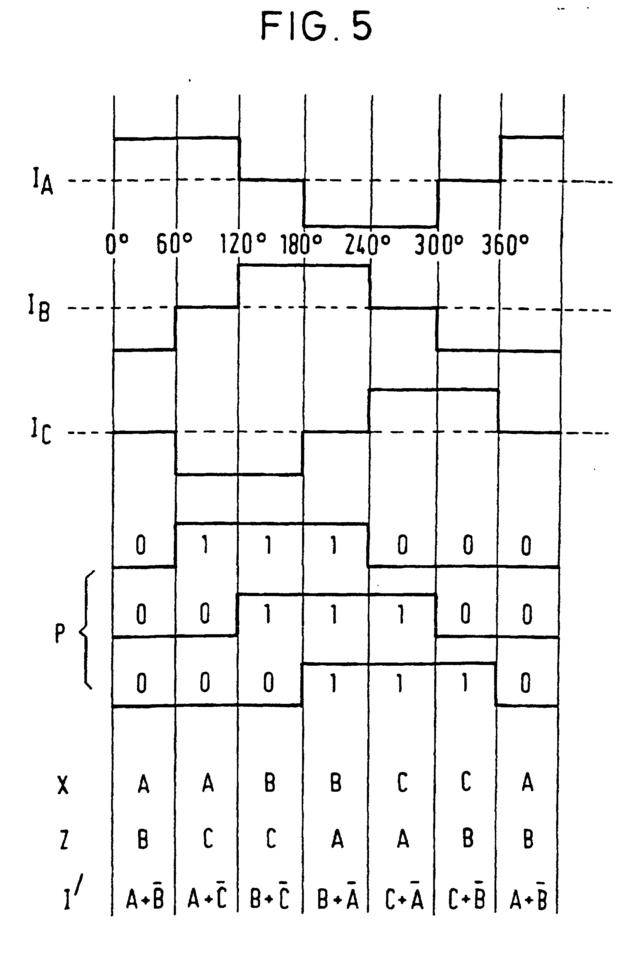

The current evaluating unit 17 is shown in more detail in Figure 4, wherein the signals representing the respective stator currents $I_A$, $I_B$ and $I_C$ are each supplied to first and second multiplexers 18, 19, which are also supplied with the position signals P. The output X of the first multiplexer 18 is applied to an inverting buffer 20, the output Y of which is applied, along with the output Z of the second multiplexer 19 to an inverting adder 21. It can be seen from the signals illustrated in Figure 5 that the output I' of the inverting adder 21 is a measure of the absolute value of the current in the stator coils. The actual value of the signal I' is twice the absolute value of the current flowing in two of the phases at any one instant.

The circuitry of Figure 3 thus performs pulse width modulation wherein a 10kHz square wave is modulated in accordance with a current demand signal D. Since the square wave is not synchronized with the rotational position of the motor-generator, the resulting control regime is an asynchronous pulse width modulation.

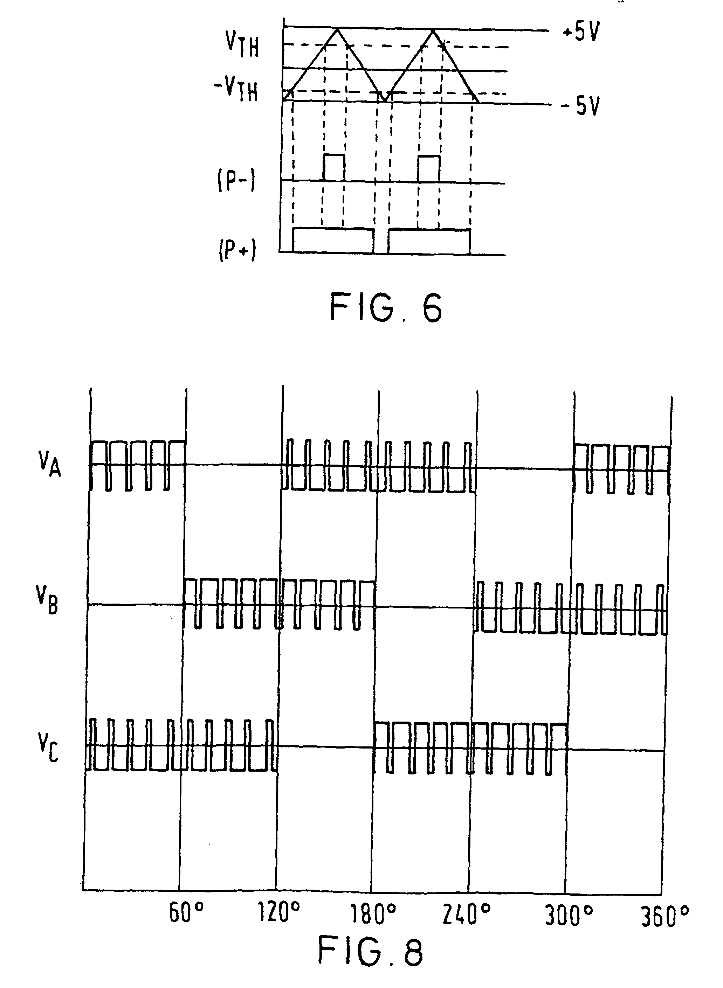

The conversion of the triangular wave produced by the integrator 10 into the two signals (P+) and (P-) in accordance with the threshold signals $V_{TH}$ and $-V_{TH}$ applied to the first and second comparators 11,12 is illustrated in Figure 6. As the value of $V_{TH}$ increases, due to an increase in the current demand signal D, so the mark-to-space ratio of the signal (P+) increases and that of the. signal (P-) decreases.

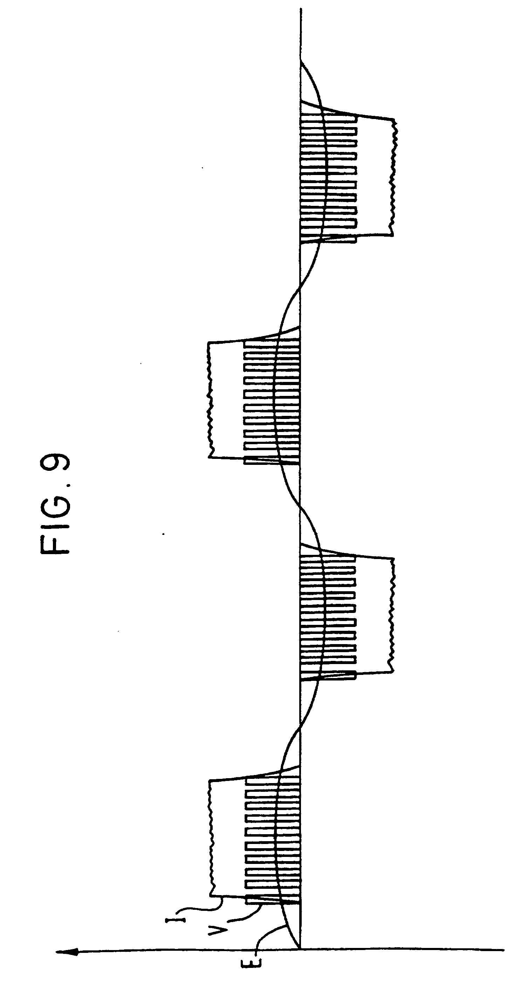

The switching arrangement, which is used both in the low-speed and high-speed regimes, is shown in Figure 7, where it can be seen that the three phases A, B and C of the stator coils are connected to the dc link 6 by means of six switches T1-T6 which are activated by respective gating signals G1-G6, collectively referred to as gating signals G. The switches are insulated gate bipolar transistors. The EPROM 13 delivers the gating signals G in accordance with Table 1, and the resulting voltage signals applied to the three phases of the stator coils are illustrated in Figure 8.

TABLE 1

| Asynchronous PWM Control (zero to half speed) | | | | | | |
|---|---|---|---|---|---|---|
| Rotor Position (Electrical degrees) | Output Applied to Switch Gate | | | | | |
| | T1 | T4 | T3 | T6 | T5 | T2 |
| 0 to 60 | P+ | $\overline{P+}$ | O | O | P- | $\overline{P-}$ |
| 61 to 120 | O | O | P+ | $\overline{P+}$ | P- | $\overline{P-}$ |
| 121 to 180 | P- | $\overline{P-}$ | P+ | $\overline{P+}$ | O | O |
| 181 to 240 | P- | $\overline{P-}$ | O | O | P+ | $\overline{p+}$ |
| 241 to 300 | O | O | P- | $\overline{P-}$ | P+ | $\overline{P+}$ |
| 301 to 360 | P+ | $\overline{P+}$ | P- | $\overline{P-}$ | O | O |

The voltage V applied to each phase of the stator coils, together with the resultant current I and the back-emf E are illustrated in Figure 9, where it can be seen that the current is substantially in phase with both the applied voltage and the back-emf, the magnitude of the back-emf being approximately equal to that of the time-averaged applied voltage.

As mentioned above, a fixed carrier frequency of 10 kHz is used. Since this is not varied as the speed increases, the number of pulses per electrical cycle of the machine reduces as the speed increases. Eventually this method of control becomes unsuitable as unbalanced subharmonic components are generated because the number of pulses per half cycle is not a fixed integer number and the current ripple becomes high. When the microcontroller 16 senses from the position signals P that the rotational speed is 400Hz, it initiates the high-speed regime.

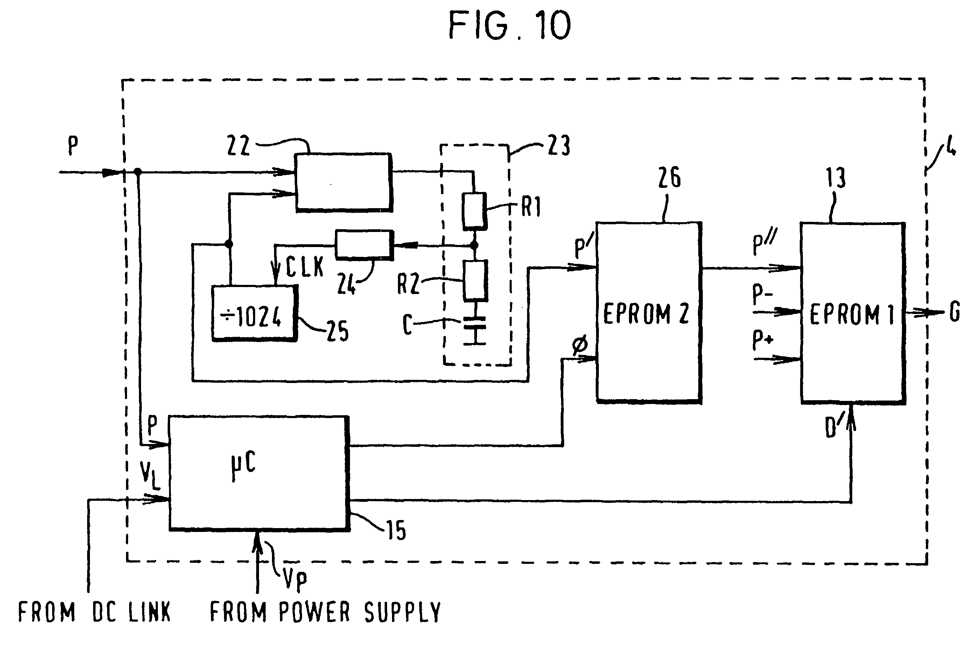

Figure 10 illustrates circuitry used in the high-speed regime of the motor-generator when the rotational speed exceeds about 400Hz. This is the normal operating mode, since, for a given power output, less torque is required at high speeds and therefore less current is required. In this mode, the signal (P+) is retained at its high level, and P(-) is held at its low level.

This mode of operation is characterised in that the phase angle of the voltage applied to the stator coils is varied in accordance with the power demand. Thus, whereas in the arrangement shown in Figure 3, the timing of the voltage signals $V_A$, $V_B$, $V_C$ applied to the stator coils is determined using the position signals P derived from the position sensors 3, it is necessary, in this mode of operation, to adjust the position signals to take into account the desired phase change.

The circuity used in the high-speed regime is shown in Figure 10. The incoming position signals P from the position sensors 3 are in the form of a single pulse per sensor for each electrical cycle. The signal from one of the sensors is supplied to a phase-locked loop comprising a phase comparator 22, a loop filter 23, a voltage-controlled oscillator 24 and a clock divider 25. The signal P is supplied to a first input of the phase comparator 22 which generates a voltage signal at its output the magnitude of which is proportional to the phase difference between the two signals at the respective inputs. This output voltage signal is then supplied to the loop filter 23 which is in the form of a series connection of two resistors R1 and R2 and a capacitor C. The voltage level appearing at a connection point between the two resistors $R_1$, $R_2$ is supplied to the voltage-controlled oscillator 24 which generates a signal having a frequency proportional to the voltage at the input. This frequency signal is supplied to the clock input CLK of a counter-divider 25 which generates an output filtered position signal P' having a frequency equal to that of the output of the voltage-controlled oscillator divided by 1024.

The components of this phase-locked loop are selected such that the loop can follow input frequency variations but also be able to remove noise and jumps in the input frequency. The function of the loop filter 23 is not only to provide system smoothing, but also to ensure that the phase margin between the input position signal P and the output position signal P' is less than -180°. Indeed, the output position signal P' is normally in phase with the input position signal P.

The output position signal P' is applied to an input of a second EPROM 26. This signal P' is combined in the second EPROM 26 with a phase shift signal Ø, generated from a look-up table in the microcontroller 16, and determined by the speed of the motor-generator and the power demand, so as to produce a further adjusted position signal P". This signal P" is supplied, together with a demand signal D' from the microcontroller 16, to the first EPROM 13 which generates the gating signals G supplied to the switching module 8, as in the low-speed regime. The phase shift signal Ø and the demand signal D' are such as to cause the stator current to vary with rotational speed in such a manner as to keep the power supplied to the motor-generator at a constant level. The gating signals in the high-speed regime are presented in Table 2.

TABLE 2

| Phase Control (half speed to full speed) | | | | | | |
|---|---|---|---|---|---|---|
| Rotor Position (Electrical degrees) | Output Applied to Switch Gate | | | | | |
| | T1 | T4 | T3 | T6 | T5 | T2 |
| 330 to 30 | ON | OFF | OFF | ON | ON | OFF |
| 31 to 90 | ON | OFF | OFF | ON | OFF | ON |
| 91 to 150 | ON | OFF | ON | OFF | OFF | ON |
| 151 to 210 | OFF | ON | ON | OFF | OFF | ON |
| 211 to 270 | OFF | ON | ON | OFF | ON | OFF |
| 271 to 330 | OFF | ON | OFF | ON | ON | OFF |

In the high-speed regime, two different arrangements may be employed. In the first, the power transfer is controlled purely by varying the phase of the applied voltage in relation to the rotational position of the motor-generator. In the second, the power transfer is additionally controlled by varying the time-averaged voltage applied to the stator coils within each half electrical cycle.

PHASE-ONLY CONTROL

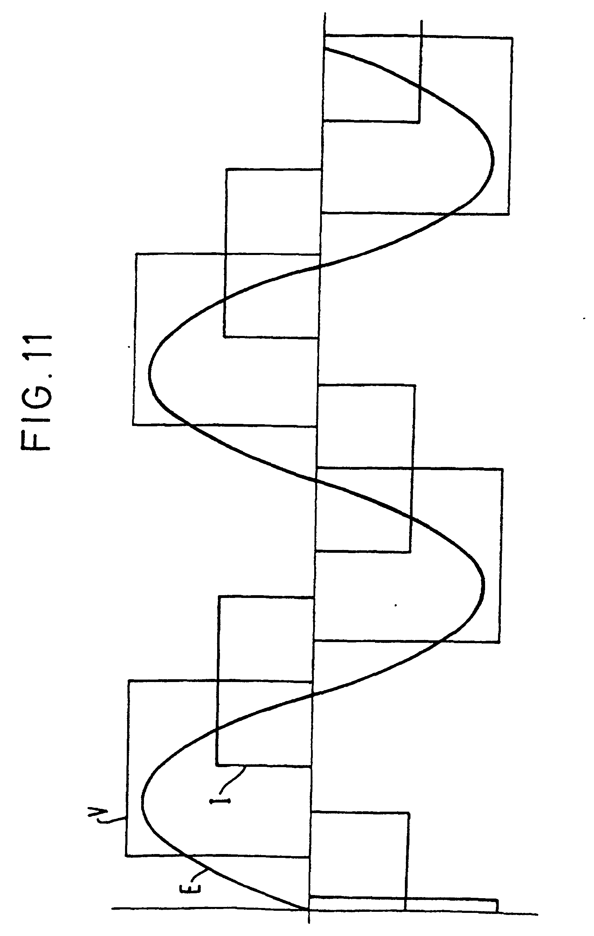

In this arrangement, the gating signals G are generated by the first EPROM 13 solely in dependence on the further adjusted position signal P" produced by the second EPROM 26, with no account being taken by the first EPROM 13 of the demand signal D'. In practice, the current in the stator coils is not generally in phase with the back-emf, and the waveforms of the applied voltage, stator current and back-emf are typically as shown in Figure 11. The voltage waveform remains constant, irrespective of the demand signal D', the waveform having been programmed into the first EPROM 13.

PHASE AND VOLTAGE CONTROL

1. SYNCHRONOUS PULSE WIDTH MODULATION

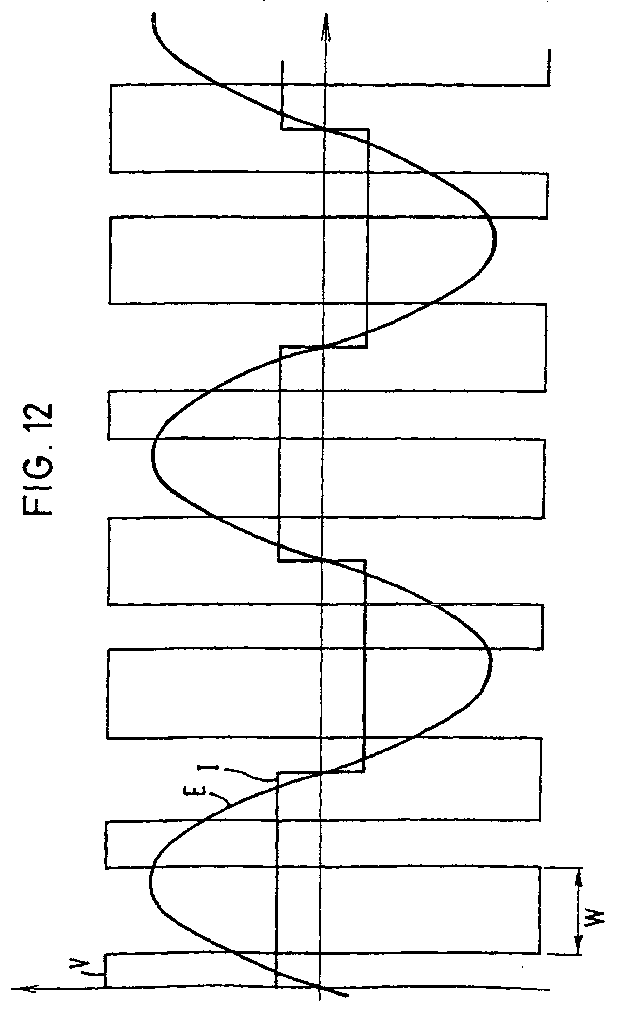

In this arrangement, the phase of the applied voltage is controlled such that the resulting stator current is substantially in phase with the back-emf, thereby maximising power transfer between the stator coils and the dc link 6. In this case, the phase of the voltage is controlled in dependence on the phase demand signal Ø, as in the phase-only control, but the voltage is additionally controlled by varying the gating signals G in accordance with the incoming demand signal D' supplied to the first EPROM 13 from the microcontroller 16. In this case two voltage pulses are applied to each phase of the stator coils within each half electrical cycle, the time-width W between each pair of pulses being controlled in dependence on the demand signal D'. The resulting voltage, current and back-emf waveforms are as illustrated in Figure 12. Since the pulses are synchronised with the rotational position of the rotor, this mode of control is effectively synchronised pulse width modulation, in contrast to the unsynchronised pulse width modulation employed in the low-speed regime.

This additional control has been found to be particularly beneficial in low-voltage applications, e.g., where the voltage on the dc link is 90V.

2. COMMUTATION WIDTH CONTROL

In the phase-only mode of operation, there is a constant "off time" of typically 60° within each electrical cycle between the adjacent positive and negative voltage pulses applied to the stator coils, the over-all time of each pair of pulses applied being 240° within each electrical cycle, and this width remains constant.

However, by adjusting the commutation width of the pulses, further control of the current generated in the stator coils can be effected. Thus, by decreasing the commutation width in the range of 0° to 120° for each pulse in a half electrical cycle the time within each electrical cycle during which current is generated in the stator coil can be controlled, thereby controlling the power transferred to the motor-generator. The commutation width value is determined from a look-up table in dependence on a power demand signal.

## VOLTAGE CONTROL (APPLICABLE TO ALL HIGH-SPEED CONTROL MODES)

For most applications a constant dc output voltage is required. A demand level will be set and the machine controlled in such a manner as to maintain the required link voltage under all load conditions. In practice, hysteresis must be included between the voltage for the charge mode and the discharge mode to prevent the system hunting. When the dc voltage is above a first predetermined level, a charging mode is established in which the machine will draw energy from the dc link. In this case, the voltage level is greater than that of the back-emf. If the link voltage falls below a second predetermined, lower level for some reason, such as a failure of the external power supply, then the motor-generator will operate in the discharge mode to maintain the dc link voltage at this lower level. In this case, the applied voltage is less than the back-emf, and current will flow from the stator coils to the dc link 6. The voltage applied to the stator coils is controlled in the same manner during the discharge mode as in the charging mode, except that, whereas, during charging, the voltage level applied is higher than the back-emf, it is lower than the back-emf during the generating mode.

## PROTECTION

In the above-described arrangements, the magnitude of the current in the stator coils is compared with a maximum limit value such that, should the current exceed this value, the motor-generator is shut down. The maximum limit is determined by a maximum permitted temperature caused by the current in the stator coils, by the need to prevent saturation of the stator cores around which the coils are wound and by the need to prevent demagnetisation of the rotor permanent magnet.

## OPERATING MODES

The system has several operating modes which are described below.

To start the operation of the motor generator, firing pulses are released to the insulated-gate bipolar transistors, and the rotor speed is ramped up from zero. Because of mechanical resonances and to prevent bearing wear below lift-off speed, it is desirable that the motor-generator be prevented from operating continuously at certain frequencies. The control system is programmed to prevent operation at any set electrical frequency between zero and 720 Hz (i.e. rotational speeds up to 120 Hz) for more than 1 s. During this phase, the rotor is accelerated with the maximum torque at which the system is able to operate. This serves to minimise the time spent in this mode. Once the rotational speed has reached 120 Hz, the control transfers to the next operating mode.

The rotor is then accelerated under constant torque control. On reaching approximately half of full speed the control transfers to the charge mode.

The charge, idle and discharge modes are the normal operating states of the equipment. In the charge mode, the rotor is accelerated under constant power control. On reaching full speed the control transfers to the idle state, during which the system maintains the rotor speed at its maximum value. In order to minimise losses in this mode the inverter switching is disabled if the power required to maintain the motor-generator speed falls below a certain minimum level. Other than a fault being detected, the only condition that can bring the system out of this mode is a failure of the input supply voltage. When this is detected the control transfers to the discharge mode.

In the discharge mode, the power flow from the motor-generator is controlled to be sufficient to feed the system loads and maintain a constant voltage on the dc link 6. If the supply does not return before the rotor speed has fallen to half of full speed (i.e. no useable energy remaining), the control transfers to discharging at a minimum rate so as to maintain the link voltage and current to the power supply while drawing only the minimum amount of energy from the motor-generator. If the supply does return before half speed is reached, the control reverts back to the charge mode.

A brake mode serves to slow the rotor as quickly as possible in the event of a fault in order to prevent permanent damage. On entering this mode, the electric brake is enabled. If the rotor speed is greater than half of full speed, the braking mode operates under constant power. If the speed is less than half speed, the braking mode operates under maximum torque. When the rotor has slowed to 120 Hz, the braking continues using maximum torque down to zero speed.

**Claims**

1. A control apparatus for an ac-powered electric motor-generator, wherein the control apparatus is configured whereby, in use, during a first, low-speed regime, the power input is controlled by varying the time averaged voltage applied to the motor-generator within each half electrical cycle, while keeping substantially constant the phase of the applied voltage in relation to the rotational position of the motor-generator and, during a second, high-speed regime, the power input/output is controlled by varying the phase of the voltage in relation to the rotational position of the motor generator both when the motor-generator is acting as a motor and when it is acting as a generator.

2. A control apparatus as claimed in claim 1, wherein, the control module is configured whereby, in use, during said low-speed regime, the time-averaged voltage is varied using asynchronous pulse width modulation.

3. A control apparatus as claimed in claim 1 or claim 2, wherein, the control module is configured whereby, in use, during the low-speed regime, the magnitude of the voltage is so varied as to approximate a rectangular waveform having the same frequency as the back-emf.

4. A control apparatus as claimed in any preceding claim, wherein, the control module is configured whereby, in use, during said high-speed regime, the time-averaged voltage applied within each half electrical cycle is kept substantially constant.

5. A control apparatus as claimed in any one of claims 1 to 3 wherein, the control module is configured whereby, in use, during said high-speed regime, the power input is controlled by varying both the time-averaged voltage applied within each half electrical cycle and the phase of the voltage in relation to the rotational position of the motor-generator.

6. A control apparatus as claimed in claim 5, wherein, the control module is configured whereby, in use, during said high-speed regime, the magnitude of the voltage is so varied by synchronous pulse width modulation.

7. A control apparatus as claimed in claim 5, wherein, the control module is configured whereby, in use, during said high-speed regime, the magnitude of the voltage is so varied by commutation width control.

8. A control apparatus as claimed in any preceding claim, wherein, the control module is configured whereby, in use, the second, high-speed regime is initiated when the motor-generator speed exceeds a predetermined level.

9. A control apparatus as claimed in claim 8, wherein the control module is configured whereby, in use, the predetermined level is around 400 revolutions per second.

10. A control apparatus as claimed in claim 8 or claim 9, wherein a position encoder (3) is configured to sense the motor speed, which position encoder is arranged to sense the relative rotational positions of the stator (2) and rotor (1) of the motor-generator.

11. A control apparatus as claimed in any preceding claim, further comprising means responsive to the current in the motor-generator for terminating operation of the motor-generator when the current exceeds a maximum limit value.

12. A method of controlling an ac-powered electric motor-generator, wherein, during a first, low-speed regime the power input is controlled by varying the time-average voltage applied to the motor-generator within each half electric cycle, while keeping substantially constant the phase of the applied voltage in relation to the rotational position the motor-generator and, during a second, high-speed regime the power input/output is controlled by varying the phase of the voltage in relation to the rotational position of the motor-generator both when the motor-generator is acting as motor and when it is acting as a generator.

13. A method as claimed in claim 12, wherein during said low-speed regime, the time-averaged voltage varied using asynchronous pulse width modulation.

14. A method as claimed in claim 12 or claim 13 wherein, during the low-speed regime, the magnitude of the voltage is so varied as to approximate a rectangular waveform having the same frequency as the back-emf.

15. A method as claimed in any one of claims 12 to 14 wherein, during said high speed regime, the time-average voltage applied within each half electrical cycle is kept substantially constant.

16. A method as claimed in any one of claims 12 to 14 wherein, during said high-speed regime, the power input is controlled by varying both the time-averaged voltage applied within each half electrical cycle and the phase of the voltage in relation to the rotational position of the motor generator.

17. A method as claimed in claim 16, wherein during said high-speed regime, the magnitude of the voltage is so varied by synchronous pulse width modulation.

18. A method as claimed in claim 16, wherein, during said high-speed regime, the magnitude of the voltage is so varied by commutation width control.

19. A method as claimed in any one of claims 12 to 18, wherein the second, high-speed regime is initiated when the motor-generator speed exceeds a predetermined level.

20. A method as claimed in claim 19, wherein the motor-generator speed exceeds a predetermined level.

21. A method as claimed in claim 19 or claim 20, wherein the motor speed is sensed using a position encoder arranged to sense to relative rotational positions of the stator and rotor of the motor-generator.

22. A method as claimed in any one of claims 12 to 21, further comprising means responsive to the current in the motor-generator for terminating operation of the motor-generator when the current exceeds a maximum limit value.

**Patentansprüche**

1. Steuervorrichtung für einen wechselstromgetriebenen elektrischen Motorgenerator, wobei die Steuervorrichtung so ausgeführt ist, dass in Funktion während eines ersten, eines Niedrigdrehzahl-Betriebszustandes die Energiezufuhr gesteuert wird, indem die an den Motorgenerator angelegte zeitgemittelte Spannung innerhalb jeder elektrischen Halbperiode varriert wird, während die Phase der angelegten Spannung in Bezug auf die Drehposition des Motorgenerators im Wesentlichen konstant gehalten wird, und während eines zweiten, eines Hochdrehzahl-Betriebszustandes die Energiezufuhr/-abgabe gesteuert wird, indem die Phase der Spannung in Bezug auf die Drehposition des Motorgenerators sowohl dann variiert wird, wenn der Motorgenerator als ein Motor arbeitet, als auch dann, wenn er als ein Generator arbeitet.

2. Steuervorrichtung nach Anspruch 1, wobei das Steuermodul so konfiguriert ist, dass in Funktion während des Niedrigdrehzahl-Betriebszustandes die zeitgemittelte Spannung unter Verwendung asynchroner Pulsbreitenmodulation variiert wird.

3. Steuervorrichtung nach Anspruch 1 oder Anspruch 2, wobei das Steuermodul so konfiguriert ist, dass in Funktion während des Niedrigdrehzahl-Betriebszustandes der Betrag der Spannung so variiert wird, dass er sich einer Rechteckwellenform mit der gleichen Frequenz wie der Gegen-EMK nähert.

4. Steuervorrichtung nach einem der vorangehenden Ansprüche, wobei das Steuermodul so konfiguriert ist, dass in Funktion während des Hochdrehzahl-Betriebszustandes die in jeder elektrischen Halbperiode angelegte zeitgemittelte Spannung im Wesentlichen konstant gehalten wird.

5. Steuervorrichtung nach einem der Ansprüche 1 bis 3, wobei das Steuermodul so konfiguriert ist, dass in Funktion während des Hochdrehzahl-Betriebszustandes die Energiezufuhr gesteuert wird, indem sowohl die in jeder elektrischen Halbperiode angelegte zeitgemittelte Spannung als auch die Phase der Spannung in Bezug auf die Drehposition des Motorgenerators variiert wird.

6. Steuervorrichtung nach Anspruch 5, wobei das Steuermodul so konfiguriert ist, dass in Funktion während des Hochdrehzahl-Betriebszustandes der Betrag der Spannung durch synchrone Pulsbreitenmodulation variiert wird.

7. Steuervorrichtung nach Anspruch 5, wobei das Steuermodul so konfiguriert ist, dass in Funktion während des Hochdrehzahl-Betriebszustandes der Betrag der Spannung durch Kommutierimgsbreitensteuerung variiert wird.

8. Steuervorrichtung nach einem der vorangehenden Ansprüche, wobei das Steuermodul so konfiguriert ist, dass in Funktion der zweite, der Hochdrehzahl-Betriebszustand ausgelöst wird, wenn die Motorgenerator-Drehzahl einen vorgegebenen Pegel übersteigt.

9. Steuervorrichtung nach Anspruch 8, wobei das Steuermodul so konfiguriert ist, dass in Funktion der vorgegebene Pegel um 400 Umdrehungen pro Sekunde herum liegt.

**10.** Steuervorrichtung nach Anspruch 8 oder Anspruch 9, wobei ein Stellungsgeber (3) so konfiguriert ist, dass er die Motordrehzahl erfasst. und der Stellungsgeber so angeordnet ist, dass er die relativen Drehpositionen des Stators (2) und des Rotors (1) des Motorgenerators erfasst.

**11.** Steuervorrichtung nach einem der vorangehenden Ansprüche, die des Weiteren eine Einrichtung umfasst, die auf den Strom in dem Motorgenerator anspricht, um den Betrieb des Motorgenerators zu beenden, wenn der Strom einen maximalen Grenzwert übersteigt.

**12.** Verfahren zum Steuern eines wechselstromgetriebenen elektrischen Motorgenerators, wobei während eines ersten, eines Niedrigdrehzahl-Betriebszustandes die Energiezufuhr gesteuert wird, indem die an den Motorgenerator angelegte zeitgemittelte Spannung in jeder elektrischen Halbperiode variiert wird, während die Phase der angelegten Spannung in Bezug auf die Drehposition des Motorgenerators konstant gehalten wird, und während eines zweiten, eines Hochdrehzahl-Betriebszustandes die Energiezufuhr/-abgabe gesteuert wird, indem die Phase der Spannung in Bezug auf die Drehposition des Motorgenerators sowohl dann variiert wird, wenn der Motorgenerator als Motor arbeitet, als auch dann, wenn er als ein Generator arbeitet.

**13.** Verfahren nach Anspruch 12, wobei während des Niedrigdrehzahl-Betriebszustandes die zeitgemittelte Spannung und Verwendung asynchroner Pulsbreitenmodulation variiert wird.

**14.** Verfahren nach Anspruch 12 oder Anspruch 13, wobei während des Niedrigdrehzahl-Betriebszustandes der Betrag der Spannung so variiert wird, dass er sich einer Rechteckweiienform mit der gleichen Frequenz wie der Gegen-EMK nähert.

**15.** Verfahren nach einem der Ansprüche 12 bis 14, wobei während des Hochdrehzahl-Betriebszustandes die in jeder elektrischen Halbperiode angelegte zeitgemittelte Spannung im Wesentlichen konstant gehalten wird.

**16.** Verfahren nach einem der Ansprüche 12 bis 14, wobei während des Hochdrehzahl-Betriebszustandes die Energiezufuhr gesteuert wird, indem sowohl die in jeder elektrischen Halbperiode angelegte zeitgemittelte Spannung als auch die Phase der Spannung in Bezug auf die Drehposition und des Motorgenerators variiert wird.

**17.** Verfahren nach Anspruch 16, wobei während des Hochdrehzahl-Betriebszustandes der Betrag der Spannung durch synchrone Pulsbreitenmodulation variiert wird.

**18.** Verfahren nach Anspruch 16, wobei während des Hochdrehzahl-Betriebszustandes der Betrag der Spannung durch Kommutierungsbreitensteuerung variiert wird.

**19.** Verfahren nach einem der Ansprüche 12 bis 18, wobei der zweite, d.h. der Hochdrehzahl-Betriebszustand ausgelöst wird, wenn die Drehzahl des Motorgenerators einen vorgegebenen Pegel übersteigt.

**20.** Verfahren nach Anspruch 19, wobei die Drehzahl des Motorgenerators einen vorgegebenen Pegel übersteigt.

**21.** Verfahren nach Anspruch 19 oder 20, wobei die Motordrehzahl unter Verwendung eines Stellungsgebers erfasst wird, der so angeordnet ist, dass er relative Drehpositionen des Stators und des Rotors des Motorgenerators ertasst.

**22.** Verfahren nach einem der Ansprüche 12 bis 21, das des Weiteren eine Einrichtung umfasst, die auf den Strom in dem Motorgenerator anspricht, um den Betrieb des Motorgenerators zu beenden, wenn der Strom einen maximalen Grenzwert übersteigt

**Revendications**

**1.** Dispositif de régulation pour un moteur générateur électrique alimenté en courant alternatif, dans lequel le dispositif de régulation est configuré, moyennant quoi, en fonctionnement, pendant un premier régime à faible vitesse, l'entrée de puissance est régulée en faisant varier la tension moyennée dans le temps appliquée au moteur générateur pendant chaque moitié de cycle électrique, tout en maintenant la phase de la tension appliquée sensiblement constante en relation avec la position de rotation du moteur générateur et, pendant un deuxième régime à grande vitesse, l'entrée/sortie de puissance est régulée en faisant varier la phase de la tension en relation avec la position de rotation du moteur générateur à la fois lorsque le moteur générateur agit en tant que moteur et lorsqu'il agit en tant que générateur.

2. Dispositif de régulation selon la revendication 1, dans lequel le module de régulation est configuré, moyennant quoi, en fonctionnement, pendant ledit régime à faible vitesse, la tension moyennée dans le temps est modifiée en utilisant une modulation de durée d'impulsion asynchrone.

3. Dispositif de régulation selon la revendication 1 ou la revendication 2, dans lequel le module de régulation est configuré, moyennant quoi, en fonctionnement, pendant le régime à faible vitesse, l'amplitude de la tension est modifiée de manière à approcher une forme d'onde rectangulaire ayant la même fréquence que la force contre-électromotrice.

4. Dispositif de régulation selon l'une quelconque des revendications précédentes, dans lequel le module de régulation est configuré, moyennant quoi, en fonctionnement, pendant ledit régime à grande vitesse, la tension moyennée dans le temps appliquée dans chaque moitié de cycle électrique est maintenue sensiblement constante.

5. Dispositif de régulation selon l'une quelconque des revendications 1 à 3, dans lequel le module de régulation est configuré, moyennant quoi, en fonctionnement, pendant ledit régime à grande vitesse, l'entrée de puissance est régulée en faisant varier à la fois la tension moyennée dans le temps appliquée dans chaque moitié de cycle électrique et la phase de la tension en relation avec la position de rotation du moteur générateur.

6. Dispositif de régulation selon la revendication 5, dans lequel le module de régulation est configuré, moyennant quoi, en fonctionnement, pendant ledit régime à grande vitesse, l'amplitude de la tension est ainsi modifiée par une modulation de durée d'impulsion synchrone.

7. Dispositif de régulation selon la revendication 5, dans lequel le module de régulation est configuré, moyennant quoi, en fonctionnement, pendant ledit régime à grande vitesse, l'amplitude de la tension est ainsi modifiée par une régulation de durée de commutation.

8. Dispositif de régulation selon l'une quelconque des revendications précédentes, dans lequel le module de régulation est configuré, moyennant quoi, en fonctionnement, le deuxième régime à grande vitesse est lancé lorsque la vitesse du moteur générateur dépasse un niveau prédéterminé.

9. Dispositif de régulation selon la revendication 8, dans lequel le module de régulation est configuré, moyennant quoi, en fonctionnement, le niveau prédéterminé est d'environ 400 tours par seconde.

10. Dispositif de régulation selon la revendication 8 ou la revendication 9, dans lequel un codeur de position (3) est configuré pour détecter la vitesse du moteur, lequel codeur de position est agencé pour détecter les positions de rotation relatives du stator (2) et du rotor (1) du moteur générateur.

11. Dispositif de régulation selon l'une quelconque des revendications précédentes, comprenant en outre des moyens sensibles au courant dans le moteur générateur pour mettre fin au fonctionnement du moteur générateur lorsque le courant dépasse une valeur limite maximum.

12. Procédé de régulation d'un moteur générateur électrique alimenté en courant alternatif, dans lequel, pendant un premier régime à faible vitesse, l'entrée de puissance est régulée en faisant varier la tension moyennée dans le temps appliquée au moteur générateur dans chaque moitié de cycle électrique, tout en maintenant la phase de la tension appliquée sensiblement constante en relation avec la position de rotation du moteur générateur et, pendant un deuxième régime à grande vitesse, l'entrée/sortie de puissance est régulée en faisant varier la phase de la tension en relation avec la position de rotation du moteur générateur à la fois lorsque le moteur générateur agit en tant que moteur et lorsqu'il agit en tant que générateur.

13. Procédé selon la revendication 12, dans lequel, pendant ledit régime à faible vitesse, la tension moyennée dans le temps est modifiée en utilisant une modulation de durée d'impulsion asynchrone.

14. Procédé selon la revendication 12 ou la revendication 13, dans lequel, pendant le régime à faible vitesse, l'amplitude de la tension est modifiée de manière à approcher une forme d'onde rectangulaire ayant la même fréquence que la force contre-électromotrice.

**15.** Procédé selon l'une quelconque des revendications 12 à 14, dans lequel, pendant ledit régime à grande vitesse, la tension moyennée dans le temps appliquée dans chaque moitié de cycle électrique est maintenue sensiblement constante.

**16.** Procédé selon l'une quelconque des revendications 12 à 14, dans lequel, pendant ledit régime à grande vitesse, l'entrée de puissance est régulée en faisant varier à la fois la tension moyennée dans le temps appliquée dans chaque moitié de cycle électrique et la phase de la tension en relation avec la position de rotation du moteur générateur.

**17.** Procédé selon la revendication 16, dans lequel, pendant ledit régime à grande vitesse, l'amplitude de la tension est ainsi modifiée par une modulation de durée d'impulsion synchrone.

**18.** Procédé selon la revendication 16, dans lequel, pendant ledit régime à grande vitesse, l'amplitude de la tension est ainsi modifiée par une régulation de durée de commutation.

**19.** Procédé selon l'une quelconque des revendications 12 à 18, dans lequel le deuxième régime à grande vitesse est lancé lorsque la vitesse du moteur générateur dépasse un niveau prédéterminé.

**20.** Procédé selon la revendication 19, dans lequel la vitesse du moteur générateur dépasse un niveau prédéterminé.

**21.** Procédé selon la revendication 19 ou la revendication 20, dans lequel la vitesse du moteur est détectée en utilisant un codeur de position agencé pour détecter les positions de rotation relatives du stator et du rotor du moteur générateur

**22.** Procédé selon l'une quelconque des revendications 12 à 21, comprenant en outre des moyens sensibles au courant dans le moteur générateur pour mettre fin au fonctionnement du moteur générateur lorsque le courant dépasse une valeur limite maximum.

# FIG.1

FIG.2

FIG. 3

# FIG.4

# FIG. 5

| X | A | A | B | B | C | C | A |
|---|---|---|---|---|---|---|---|
| Z | B | C | C | A | A | B | B |
| I' | A+B̄ | A+C̄ | B+C̄ | B+Ā | C+Ā | C+B̄ | A+B̄ |

FIG. 6

FIG. 8

FIG. 7

FIG. 9

EP 0 908 002 B1

# FIG. 10

EP 0 908 002 B1

FROM DC LINK   FROM POWER SUPPLY

# FIG. 11

EP 0 908 002 B1

FIG. 12